Europäisches Patentamt

European Patent Office

Office européen des brevets

(11) Publication number: **0 324 284**
**A1**

## (12) EUROPEAN PATENT APPLICATION

(21) Application number: 88312424.0

(51) Int. Cl.⁴: **H04B 1/20**

(22) Date of filing: 30.12.88

(30) Priority: 30.12.87 GB 8730323

(43) Date of publication of application:
19.07.89 Bulletin 89/29

(84) Designated Contracting States:
AT BE CH DE ES FR GR IT LI LU NL SE

(71) Applicant: **SATELLITE TECHNOLOGY SYSTEMS LIMITED**
**Satellite House Blackswarth Road**
**Bristol BS5 8AU(GB)**

(72) Inventor: **Stone, Michael John**
**Baugh Farm Church Lane Downend**
**Bristol BS16 6TB(GB)**

(74) Representative: **Muir, Ian R. et al**
**HASELTINE LAKE & CO. Hazlitt House 28**
**Southampton Buildings Chancery Lane**
**London WC2A 1AT(GB)**

(54) **Control device for domestic electrical equipment.**

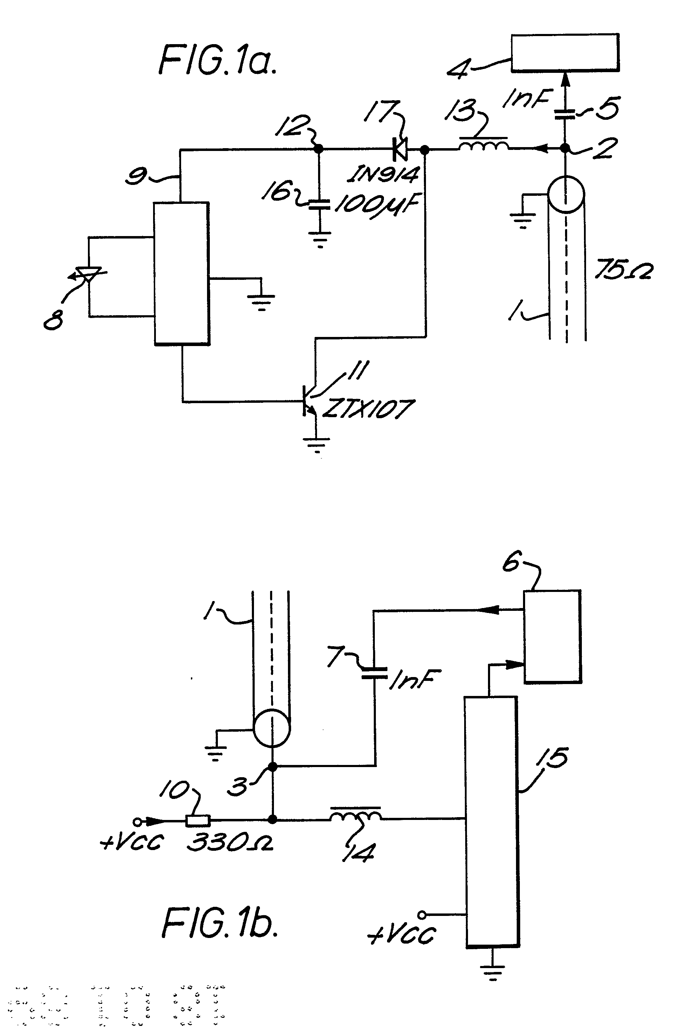

(57) There is disclosed a control device for domestic electrical equipment. The control device includes a first device (Fig. 1a) adapted for incorporation in, e.g., a television set (4) and a second device (Fig. 1b) adapted for incorporation in a controlled unit, e.g. a satellite dish aerial or a video recorder (6). The first device is adapted to supply input control pulses along a cable (1) to the second device, and the second device is adapted to supply radio-frequency signals from the controlled unit to the first device.

FIG.1a.

FIG.1b.

## CONTROL DEVICE FOR DOMESTIC ELECTRICAL EQUIPMENT

This invention relates to a control device for interconnecting domestic electrical equipment. In particular, the invention relates to a control device for interconnecting a first device, such as a television set, and a second device, such as a satellite receiver aerial, allowing radio-frequency (RF) signals to pass from the second device to the first device while control pulses pass from the first device to the second device.

Thus an object of the invention is to allow digital pulses to be transmitted along a cable interconnecting the devices while the cable is carrying a RF signal in the HF/VHF/UHF/SHF frequency range. This allows the second device to be remotely controlled by a user in the region of the first device, and supply signals to the first device.

According to the present invention, there is provided a control device for interconnecting domestic electrical equipment, the equipment comprising a first device at a first location and a second device at a second location, the second device supplying radio-frequency information to the first device and being controllable by electronic control pulses, the control device including:

an electrical cable between the first and second locations, for transmitting radio-frequency signals from the second device to the first device;

including, at the first location:

a first connection point for the first end of the cable;

first detecting means, for producing an output signal in response to the detection of an input signal; and

switching means, adapted, in use, to alter the potential at the first connection point in response to the production of an output signal by the first detecting means;

and including, at the second location:

a second connection point for the second end of the cable; and

second detecting means, for detecting changes in potential at the second connection point in response to changes in potential at the first connection point, and for supplying control pulses to the second device in response thereto.

For example, the first device may be a television set, and the second device may be any controlled device, such as a video cassette recorder or a satellite receiving dish aerial. The first location and the second location need to be electrically connected only by the cable, although it will be appreciated that they may be adjacent. For example, the controlled device may be a video recorder positioned adjacent to a television set. Thus, while the RF signal is being transmitted to the television set, digital signals may be input into the television set and transmitted to the controlled device to control its operation. A video cassette recorder may act upon the control signals by, for example, rewinding the tape or playing back a pre-recorded transmission. A satellite receiving aerial may act upon the received control signals by, for example, scanning for signals received from a different location and at a different frequency. In the preferred embodiment the changes in potential are made to a D.C. supply potential which is also carried by the cable.

It will be appreciated that a controlled system may include a plurality of first and/or second devices. Thus, control pulses supplied to a television set may be used to control both a video recorder and a satellite dish aerial. Alternatively, a single controlled device may be controlled by pulses supplied to any of a plurality of television sets located, for example, in different rooms of a home.

In addition, the first device may be connected to other electrical equipment not adapted to supply radio-frequency signals. For example, audio, cooking or other domestic equipment may be connected by the cable to the first device such that control pulses supplied to the first device are transmitted to the other equipment.

According to a second aspect of the present invention, there is provided a device for use with electrical equipment supplied with radio-frequency signals, the device comprising a radio-frequency input, for connection to a source of radio-frequency signals, a data input, and means which in response to signals from the data input causes a change in the potential at lower than RF frequency at the radio-frequency input.

According to a third aspect of the present invention, there is provided a device for use with electrical equipment acting as a source of radio-frequency signals and being controlled by pulse signals, the device comprising an input for RF signals from the equipment, a radio-frequency output for outputting the RF signals, and means for generating pulse signals in response to changes in potential of lower than RF frequency detected at the radio-frequency output.

For a better understanding of the present invention, and to show how it may be brought into effect, reference will now be made, by way of example, to the accompanying drawing, in which:

Figure 1a shows those parts of the control device located at the first location;

Figure 1b shows those parts of the control device which are provided at the second location.

In the drawing, an indication has been given of the values or catalogue numbers of certain components. This information is illustrative of a particular embodiment of the invention only; the actual components required in any particular case can be derived by the person skilled in the art on the basis of the RF frequency to be carried by the cable and the mark-space ratio of the pulses carried by the cable.

Referring to the drawing, a screened RF cable 1 is provided for connection between first and second locations. The cable is connected, at the first location, to a first connection point 2 and, at the second location, to a second connection point 3. A radio-frequency signal receiver 4, such as a television set (not shown in detail) is connected via a first blocking capacitor 5 to the first connection point 2. A radio-frequency signal generator 6, such as a satellite receiving dish (not shown in detail) is connected via a second blocking capacitor 7 to the second connection point 3. Thus, radio-frequency signals can travel along the cable from the signal generator to the signal receiver, while D.C. signals are blocked from the receiver 4 and signal generator 6.

Also connected to the connection points 2, 3 is circuitry for generating and receiving digital control signals. The invention is applicable to a device for transmitting electronic pulses generated by any convenient method. For example, the device may include an input keypad. However, in this illustrated embodiment, the device is controllable remotely using an infra-red generating handset (not shown). Infra-red pulses generated by the handset are detected by a detecting diode 8, which is connected to an amplifier 9.

The amplifier is powered by a voltage source $+V_{cc}$, which is connected via a current limiting resistor 10 to the second connection point 3. Ordinarily, the collector-emitter path of the transistor 11 is non-conducting, and so a power input connection point 12 for the amplifier is maintained at the voltage $V_{cc}$. When the diode 8 detects an infra-red signal, the amplifier 9 generates an electronic signal, which is passed to the base of the transistor 11, thereby causing the collector-emitter path of the transistor to become conductive. Thus, the first connection point 2 is connected via a first radio-frequency choke 13, which isolates the active devices from the radio-frequency signal, and through the transistor 11 to earth, and its potential falls. This change is transmitted along the cable 1, and so the potential at the second connection point 3 also falls.

When the infra-red pulse ends, the transistor 11 again ceases to conduct, and the potentials at the first and second connection points 2,3 rise. These changes in potential are passed through a second radio-frequency choke 14 to a pulse amplifier and shaper circuit 15, and then to a control section of the controlled device 6. The pulse amplifier and shaper circuit 15 is also powered by the voltage source $+V_{cc}$.

Thus, the infra-red pulses are converted to electronic signals, and transmitted along the cable to the controlled device.

To allow the power supply to the amplifier 9 to be maintained, even when the first connection point 2 is approaching earth potential, there is provided a reservoir capacitor 16, connected between the power input terminal 12 of the amplifier and earth. A blocking diode 17 prevents the reservoir capacitor 16 from discharging through the transistor 11 when this is switched on, and so, when the transistor is switched on, the reservoir capacitor is able to power the amplifier 9, the detector diode 8 and the transistor 11 for the duration of the infra-red pulse.

The pulse amplifier and shaper circuit 15 is isolated from the radio-frequency signal by the second radio-frequency choke 14, and monitors the D.C. line voltage for fast transients between the normal line voltage and a voltage level approaching ground. These pulses are then converted to the normal D.C. levels and amplitude required by the controlled device.

Thus, there is provided a device which allows digital pulses to be transmitted along the cable to the controlled device, while the controlled device is transmitting a radio-frequency signal along the cable to a receiver.

Clearly a house may be cabled with screened RF cable to enable TV sets to be supplied in each of a plurality of rooms from a common aerial and/or a common video recorder. Also the control signal providing arrangement could be used with other domestic equipment, e.g. cooking equipment, provided with change of potential control signal detection equipment, connected to receive signals from an RF cable output/input.

**Claims**

1. A control device for interconnecting domestic electrical equipment, the equipment comprising a first device at a first location and a second device at a second location, the second device supplying radio-frequency information to the first device and being controllable by electronic control pulses, the control device including:
an electrical cable between the first and second locations, for transmitting radio-frequency signals from the second device to the first device;
including, at the first location:
a first connection point for the first end of the cable;

first detecting means, for producing an output signal in response to the detection of an input signal; and

switching means, adapted, in use, to alter the potential at the first connection point in response to the production of an output signal by the first detecting means;

and including, at the second location:

a second connection point for the second end of the cable; and

second detecting means, for detecting changes in potential at the second connection point in response to changes in potential at the first connection point, and for supplying control pulses to the second device in response thereto.

2. A control device as claimed in claim 1, further comprising a voltage source connected through a resistor to the first or second connection point wherein, in use, the switching means is adapted to alter the current which flows through the resistor, in response to the production of an output signal by the first detecting means.

3. A control device as claimed in claim 1, wherein the second connection point is connected to a voltage source, and wherein the switching means comprises a transistor, the base of which is connected to the output of the first detecting means, and the collector-emitter path of which provides a connection for D.C. between the first connection point and earth, such that, in use, the potential at the first connection point falls in response to the production of an output signal by the first detecting means.

4. A control device as claimed in claim 2 or 3, wherein the first connection point is connected via a first radio-frequency choke to the first detecting means such that, in use, the voltage source acts as a power supply therefor.

5. A control device as claimed in claim 4, further comprising a reservoir capacitor connected to earth from the connection point of the first radio-frequency choke and the amplifier, and connected to the collector of the transistor via a reverse biassed diode, such that it stores sufficient charge to power the first detecting means when the first connection point is connected to earth via the transistor and is prevented from discharging through the transistor.

6. A control device as claimed in any preceding claim, wherein the first detecting means comprises an infra-red detector diode, and an amplifier, for producing output electronic pulses in response to the detection, by the diode, of infra-red pulses.

7. A control device as claimed in any preceding claim, wherein the first connection point is connected via a first blocking capacitor to the radio-frequency signal receiver and via a first radio-frequency choke to the switching means, and wherein the second connection point is connected via a second blocking capacitor to the radio signal generator and via a second radio-frequency choke to the second detecting means.

8. A control device as claimed in any preceding claim, wherein the first device is a television set and the second device is a satellite receiving aerial.

9. A control device as claimed in one of claims 1 to 7, wherein the first device is a television set, and wherein the second device is a video recorder.

10. A control device according to any preceding claim wherein domestic equipment not intended to supply an RF signal may be coupled to the electrical cable to receive change of potential control signals from a first device to effect control thereof.

11. A control device for use with electrical equipment supplied with radio-frequency signals, the device comprising a radio-frequency input, for connection to a source of radio-frequency signals, a data input, and means which in response to signals from the data input causes a change in the potential at lower than RF frequency at the radio-frequency input.

12. A television receiver incorporating a device as claimed in claim 11.

13. A device for use with electrical equipment acting as a source of radio-frequency signals and being controlled by pulse signals, the device comprising an input for RF signals from the equipment, a radio-frequency output for outputting the RF signals, and means for generating pulse signals in response to changes in potential of lower than RF frequency detected at the radio-frequency output.

14. A video recorder incorproating a device as claimed in claim 13.

15. A satellite dish aerial incorporating a device as claimed in claim 13.

## FIG.1a.

## FIG.1b.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 427 732 (MONTORIO SALVATORE) * Page 1, line 1 - page 6, line 27; page 9, line 29 - page 11, line 9; page 12, lines 20-36; figures * | 1,2,4,6 -15 | H 04 B   1/20 |
| Y | US-A-4 337 480 (BOURASSIN et al.) * Column 1, lines 5-10; column 1, line 65 - column 3, line 18; column 4, line 12 - column 5, line 68; figures 1,7 * | 1,2,4,6 -15 | |
| A | GB-A-2 092 347 (RCA CORP.) * Page 1, lines 3-35,46-63; page 2, lines 20-24; page 4, lines 3-48; claim 1; figures 1,2,5 * | 1,10,11 ,15 | |
| A | EP-A-0 058 289 (BRIONVEGA S.p.A.) * Abstract; whole document * | 1,8,11, 13,15 | |

TECHNICAL FIELDS
SEARCHED (Int. Cl.4)

H 04 B
G 11 B
H 03 J
H 01 Q

The present search report has been drawn up for all claims

| Place of search | Date of completion of the search | Examiner |
|---|---|---|
| THE HAGUE | 12-04-1989 | HAVENHAND M. |